# EUROPÄISCHE PATENTANMELDUNG

(11) **EP 1 152 596 A2**
(43) Veröffentlichungstag der Anmeldung: **07.11.2001**
(21) Anmeldenummer: 01110223.3
(22) Anmeldetag: 25.04.2001
(51) Int. Cl.: H04N 1/48

(54) **Vorrichtung und Verfahren zur Erstellung eines Bildabzuges von einer Bildvorlage**

(30) Priorität: 27.04.2000 DE 10020610
(71) Anmelder: Lindthaler, Josef, 32547 Bad Oeynhausen (DE)
(72) Erfinder: Lindthaler, Josef, 32547 Bad Oeynhausen (DE)
(74) Vertreter: WALTHER, WALTHER & HINZ Patentanwälte

(57) **Zusammenfassung**

Gegenstand der Erfindung ist ein Verfahren und eine Vorrichtung zur Erstellung eines Bildabzuges von einer Bildvorlage, insbesondere für Fotofachlabore, mit einer Bildvorlage-Zuführeinrichtung, mit einer Kamera und mit einer die Kamera haltenden Haltevorrichtung, wobei die Vorrichtung an eine elektronische Rechen- und Speichereinheit anschließbar ist. Eine Vorrichtung zur Erstellung eines Bildabzuges von einer Bildvorlage zu schaffen, die die Bildvorlage möglichst verwackelungsfrei abfotografiert, um eine konturenscharfe Reproduktion der gegebenen Bildvorlage zu erzielen wird entweder dadurch erreicht, dass die Kamera als 3-Chip Kamera (16) ausgebildet ist und einem Prismenteiler (30) zur Erzeugung je eines rot, grün und blau Abbildes der Bildvorlage nachgeschaltet ist, wobei jedes Abbild von einem Kamera-Chip erfasst wird, und ein entsprechendes Verfahren hierzu, oder dadurch erreicht, dass die Bildvorlage-Zuführeinrichtung als in vier Richtungen verfahrbarer Vorlageträger (14) ausgebildet ist.

## Beschreibung

Die vorliegende Erfindung betrifft eine Vorrichtung zur Erstellung eines Bildabzuges von einer Bildvorlage (Bild vom Bild), insbesondere für Fotofachlabore, mit einer Bildvorlage-Zuführeinrichtung, mit einer Kamera und mit einer die Kamera haltenden Haltevorrichtung, wobei die Vorrichtung an eine elektronische Rechen- und Speichereinheit anschließbar ist und ein Verfahren zur Erstellung eines Bildabzuges von einer Bildvorlage, insbesondere für Fotofachlabore, wobei von der Bildvorlage mindestens zwei, vorzugsweise drei unterschiedlich farbige monochromatische Abbilder erzeugt werden, wobei diese monochromatischen Abbilder von einer Kamera erfasst und digitalisiert werden, und wobei diese Abbilder in einer elektronischen Datenverarbeitungsanlage weiterbearbeitet werden.

Als Bildvorlage sind alle Arten von Abbildungen zu verstehen, also auch fototechnisch entwickelte, gedruckte oder handgemalte Papier- oder Folienbilder, Diapositive, Negative, usw..

Aus der EP 533 109 A2 ist ein Foto-Scanner mit zwei Bildvorlage-Zuführeinrichtungen, mit einer Kamera und einer die Kamera haltenden Haltevorrichtung bekannt, bei dem die jeweiligen Bildvorlagen mittels eines Vorlagenträgers an die gewünschte Stelle transportiert werden. Anstelle eines einzelnen Bildes können auch mehrere Bilder umfassende Seiten in den Vorlagenträger eingebracht werden. Zusammen mit der Bildvorlage werden die Bildvorlage betreffende Daten, beispielsweise Größe des Bildes, Format des Bildes, Qualität des Bildes oder dergleichen eingegeben. Mit diesen Daten wird ein der Kamera vorgeschalteter Zoom automatisch so eingestellt, dass die Kamerafläche bestmöglich durch die Bildvorlage ausgefüllt wird mit dem Ziel, nicht erwünschte Ränder etc. zu minimieren. Hierdurch wird einerseits die Aufnahme unerwünschter Daten vermieden und andererseits wird durch eine möglichst vollständige Ausleuchtung des CCD-Chips das Abbild der Bildvorlage größtmöglichst dargestellt, um eine möglichst konturenscharfe Aufnahme der Bildvorlage zu erreichen. Dies setzt aber voraus, dass der Mittelpunkt der Bildvorlage in der optischen Achse des Zooms angeordnet ist. Um dies zu erreichen, wird der Vorlagenträger manuell in Vorschubrichtung mittig in Position gebracht, um dann quer zur Vorschubrichtung ebenfalls mittig positioniert werden zu können. Dieser Vorgang wird vom Bediener am Monitor überwacht, wobei die Fotografie erst ausgelöst wird, wenn der Vorlagenträger in der gewünschten Position ist. Es versteht sich, dass ein derartiges manuelles Einstellen der Bildvorlage zeitaufwendig und kostenintensiv ist. In einer zweiten Bildvorlage-Zuführeinrichtung werden die Bilder lediglich manuell in den Vorlagenträger eingelegt, und dieser Vorlagenträger wird dann automatisch in die gewünschte Position gebracht, so dass der Vorlagenträger dann in seiner gesamten Größe abfotografiert wird. Diese Vorgehensweise ist zwar weniger arbeitsintensiv, und es können auch in kürzerer Zeitfolge mehr Bildvorlagen bearbeitet werden. Sollte jedoch die Bildvorlage kleiner als der Vorlagenträger sein (was überwiegend der Fall ist), so werden von der Kamera auch über die Bildvorlage hinaus Daten aufgenommen, da die Bildvorlage hierbei normalerweise nicht in der optischen Achse des Zooms angeordnet ist. Hierdurch werden einerseits eine Menge unnützer Daten aufgenommen, die die spätere elektronische Auswertung beeinträchtigen, und die eigentliche Bildvorlage wird nicht in optimaler Weise abfotografiert, so dass bei dem reproduzierten Bild Unschärfen auftreten.

In Vermeidung der letzgenannten Nachteile hat die Firma Gretag Imaging Inc. aus Chicopee, MA 01022 USA unter der Bezeichnung "Selexxa DRS-200" einen Kamera-Scanner zur Erstellung eines Bildabzuges von einer Bildvorlage, insbesondere für Fotofachlabore, geschaffen, bei dem die Bildvorlage in einem linear verschieblich angeordneten Vorlagenträger eingelegt wird, bevor Letzterer unter die Kamera fährt. Anschließend wird die an einer Haltevorrichtung verschieblich gehaltene Kamera solange vertikal und horizontal verfahren, bis die Kamera die Bildvorlage ordnungsgemäß erfasst und fokussiert hat, insbesondere bis die Bildvorlage größtmöglich auf den CCD-Chip projiziert ist. Nachdem dann die im Einzelfall erforderliche Belichtungszeit feststeht und eingestellt wurde, werden von der Bildvorlage drei verschiedene Aufnahmen angefertigt. Diese drei Aufnahmen unterscheiden sich durch einen jeweils vorgeschalteten Rot-, Grün- oder Blau-Filter. Die derart digital gewonnenen Bilder werden dann an eine elektronische Datenverarbeitungsanlage weitergeleitet und zu einem verkaufsfertigen Bild weiterverarbeitet.

Beim Verfahren der Kamera gerät das gesamte System, insbesondere aber die Kamera und deren Haltevorrichtung, in vibrierende Schwingungen. Berücksichtigt man nun, dass derartige Vorrichtungen zur Erstellung eines Bildabzuges von einer Bildvorlage bis zu 500 Reproduktionen pro Stunde anfertigen, so wird deutlich, dass die durch das Verfahren der Kamera erzeugten Schwingungen und Vibrationen zum Zeitpunkt der Öffnung der Blende noch nicht vollständig abgeklungen sind. Hierdurch werden Verwacklungen der Aufnahme verursacht. Zwar könnte man abwarten bis die Vibrationen und/oder Schwingungen abgeklungen sind bevor die Aufnahme gemacht wird, jedoch würde dabei die Anzahl der Aufnahmen je Zeiteinheit, und damit die Wirtschaftlichkeit stark sinken.

Durch das sukzessive Aufnehmen der drei Farbbilder bei den Kamera-Scannern gemäß der Firma Gretac und gemäß der EP 533 109 A1 entstehen beispielsweise durch das Öffnen und Schließen der Blende oder durch die Verschiebung der Farbfilter Verwackelungen, so dass die drei Farbbilder nicht hundertprozentig identisch sind. Beim elektronischen Zusammenfügen dieser drei Farbbilder ergeben sich dann Unschärfen, die auch nicht durch elektronische Bearbeitung korrigiert werden können.

Davon ausgehend liegt der vorliegenden Erfindung die Aufgabe zugrunde, eine Vorrichtung und ein Verfahren zur Erstellung eines Bildabzuges von einer Bildvorlage zu schaffen, die die Bildvorlage möglichst verwackelungsfrei abfotografiert, um eine konturenscharfe Reproduktion der gegebenen Bildvorlage zu erzielen.

Als erste technische Lösung dieser Aufgabe wird erfindungsgemäß vorgeschlagen die eingangs genannte Vorrichtung dahingehend weiterzubilden, dass die Kamera als 3-Chip Kamera ausgebildet ist und einen Prismenteiler zur Erzeugung je eines roten, grünen und blauen Abbildes der Bildvorlage nachgeschaltet ist, wobei jedes Abbild von einem Kamera-Chip erfasst wird.

Als weitere technische Lösung dieser Aufgabe wird erfindungsgemäß vorgeschlagen, das eingangs genannte Verfahren dahingehend weiterzubilden, dass die Bildvorlage mittels eines Prismenteilers gleichzeitig in zwei oder drei unterschiedlich farbige, monochromatische Abbilder zerlegt wird, und dass die Abbilder gleichzeitig mittels einer 3 Chip Kamera erfasst und digitalisiert werden.

Eine nach dieser technischen Lehre ausgebildete Vorrichtung und ein nach dieser technischen Lehre arbeitendes Verfahren haben den Vorteil, dass die drei durch den Prismenteiler geschaffenen monochromatischen Bilder gleichzeitig auf dem CCD-Chip der Kamera auftreffen und gleichzeitig aufgenommen werden. Folglich sind alle drei Farbbilder vollkommen identisch und weisen die gleichen Verwackelungen auf, so dass hieraus im Rahmen der elektronischen Weiterverarbeitung wirklich konturenscharfe Bilder angefertigt werden können.

Ein weiterer Vorteil besteht darin, dass das Prisma die auftretenden Vibrationen, wenn überhaupt, gleichermaßen an die drei Farbbilder überträgt, und so etwaige Erschütterungen nicht zu Verfälschungen des Bildes führen.

Dabei hat es sich als vorteilhaft erwiesen, eine hochauflösende 3 Chip CCD Analogflächenkamera und einen Prismenteiler der Firma JVC einzusetzen.

In einer bevorzugten Weiterbildung des erfindungsgemäßen Verfahrens wird vorgeschlagen, die Bildvorlage mittels Kantendetektion zu lokalisieren und nicht zur Bildvorlage gehörende Daten nicht abzuspeichern. Hierdurch wird die Datenmenge deutlich reduziert, so dass die bildliche Bearbeitung der Aufnahme schneller durchgeführt werden kann und so dass der benötigte Speicherplatz reduziert werden kann. Ein weiterer Vorteil besteht darin, dass hierdurch ein Zoomen der Bildvorlage überflüssig wird, so dass die Rüstzeit je Bild verringert wird, was zu einem höheren Bilddurchsatz führt.

Als zweite technische Lösung dieser Aufgabe wird erfindungsgemäß vorgeschlagen die eingangs genannte Vorrichtung dahingehend weiterzubilden, dass die Bildvorlage-Zuführeinrichtung als in vier Richtungen verfahrbarer Vorlageträger ausgebildet ist.

Eine nach dieser technischen Lehre ausgebildete Vorrichtung hat den Vorteil, dass durch den in allen Richtungen bewegbaren Vorlageträger die Bildvorlage schnell und einfach, gegebenenfalls auch automatisiert mit seinem Mittelpunkt in die optische Achse der Kamera gebracht werden kann. Somit ist ein entsprechendes Verfahren der Kamera überflüssig, so dass diese nunmehr fest an der Haltevorrichtung montiert werden kann. Durch die nicht vorhandene Bewegung der Kamera können auch keine Vibrationen, Schwingungen oder Stöße mehr auftreten.

Ein weiterer Vorteil besteht darin, dass es hierdurch möglich ist, Kamera und Vorlagenträger baulich zu entkoppeln, so dass etwaig auftretende Vibrationen, Schwingungen oder Stöße nicht mehr auf die Kamera übertragen werden.

In einer anderen, bevorzugten Weiterbildung weist der Vorlageträger eine Saugeinrichtung auf, wobei die Bildvorlage durch einer Anzahl von Saugöffnungen mittels Unterdruck im Vorlageträger gehalten ist. Hierdurch wird eine zuverlässige Fixierung der Bildvorlage während dem Verfahren des Vorlageträgers erreicht. Des Weiteren werden hierdurch gewellte oder mit Eselsohren versehene Bildvorlagen flächig auf den Vorlageträger gezogen, so dass eine einwandfreie Reproduktion möglich wird.

In einer bevorzugten Weiterbildung umfasst die Kamera ein Zoom-Objektiv, vorzugsweise ein Motor-Zoom-Objektiv. Dies hat den Vorteil, dass hierdurch die Bildvorlage derart vergößert oder verkleinert werden kann, dass der CCD Chip voll ausgefüllt ist, so dass eine bestmögliche Aufnahme der Bildvorlage erreicht wird mit der Folge, dass die Wiedergabe der Bildvolage möglichst scharf und präzise erfolgt.

Insbesondere durch eine Lagerung des Zoom-Objektivs in einem entsprechenden Öl-Gleitlager können die beim Verfahren des Objektives auftretenden Schwingungen und Vibrationen gesenkt werden.

In einer besonders bevorzugten Weiterbildung sind im Vorlageträger Sensoren vorgesehen, mittels derer die Größe der Bildvorlage erfasst werden kann. Mit den so ermittelten Daten wird der entsprechende Bildausschnitt (Zoom) im (Motor-) Zoom-Objektiv automatisch eingestellt, der Fokus optimiert und die Blende (Iris) gemäß den Objektivparametern verändert. Dies geschieht bereits beim Einfahren der Bildvorlage, so dass hierdurch eine sehr viel schnellere Bearbeitung der Bildvorlage ermöglicht wird.

Weitere Vorteile der erfindungsgemäßen Vorrichtung ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
Fig. 1 eine schematische, perspektivische Ansicht einer erfindungsgemäßen Vorrichtung;
Fig. 2 eine perspektivische Ansicht der Kamera, der Haltevorrichtung und des Vorlageträgers der Vorrichtung gemäß Fig. 1.

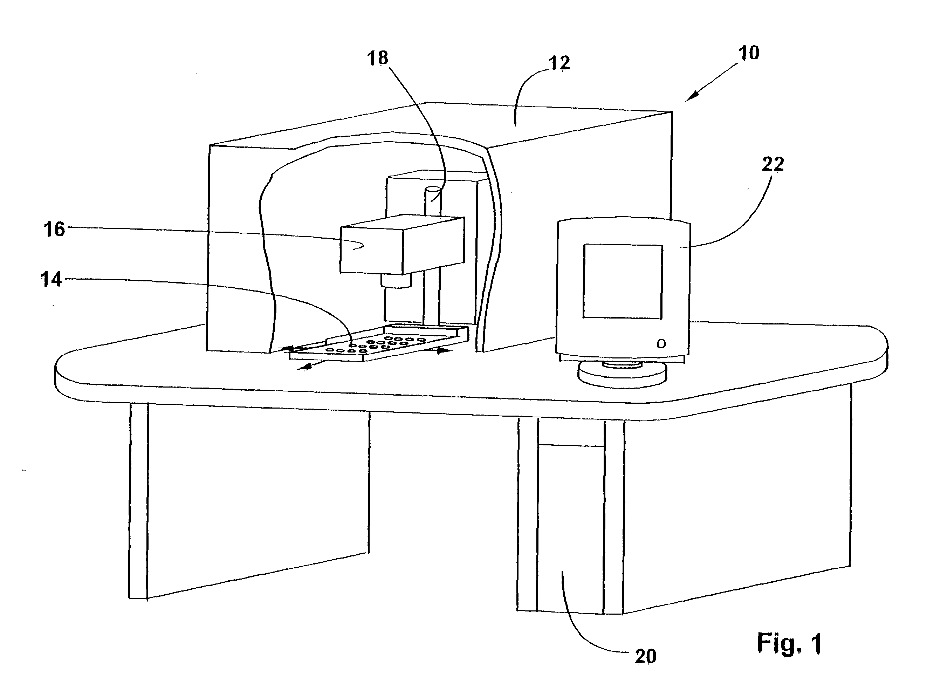

Fig. 1 zeigt einen kompletten Arbeitsplatz zur Erstellung eines Bildabzuges von einer Bildvorlage, insbesondere für Fotofachlabore. Die hierzu erforderliche Vorrichtung zur Erstellung eines Bildabzuges von einer Bildvorlage ist als Kamera-Scanner 10 ausgeführt und umfasst ein hier aufgebrochen dargestelltes Gehäuse 12, ein in der horizontalen Ebene verfahrbaren Vorlageträger 14 zur Aufnahme einer hier nicht dargestellten Bildvorlage, eine Kamera 16 und eine Haltevorrichtung 18, um die Kamera 16 in der gewünschten Position zu halten. Dieser Kamera-Scanner 10 ist an eine elektronische Datenverarbeitungsanlage 20 angeschlossen, so dass über deren Bildschirm 22 die aufgenommenen Bilder begutachtet und gegebenenfalls weiterbearbeitet werden können.

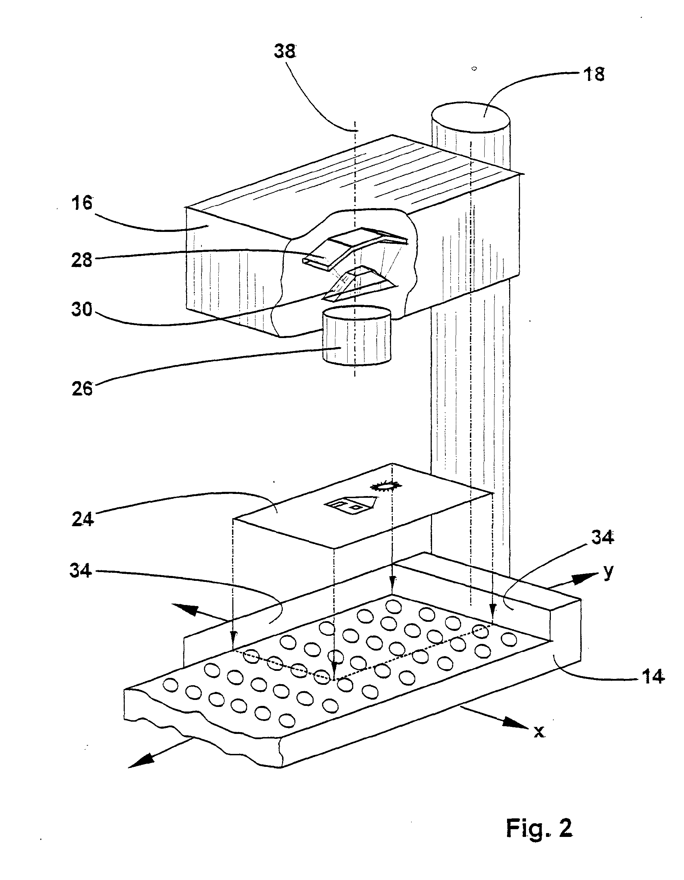

In Figur 2 ist das Kernstück des Kamera-Scanners 10 vergrößert dargestellt, wobei eine Bildvorlage 24 explosionsartig hochgezogen dargestellt ist, um deren Positionierung auf dem Vorlageträger 14 besser zu verdeutlichen. Bei der hier dargestellten Kamera 16 handelt es sich um eine hochauflösende Analogflächenkamera, die unverschieblich an der Haltevorrichtung 18 angebracht ist. Zu dieser hochauflösenden, digitalen Analogflächenkamera gehört ein mit Öl-Gleitlagern versehenes Motor-Zoom-Objektiv 26, ein 3-CCD-Chip 28, welcher in drei Teilbereiche unterteilt ist und einen zwischen dem Motor-Zoom-Objektiv 26 und dem 3-CCD-Chip 28 angeordneten Prismenteiler 30. Im Gegensatz zum Stand der Technik, bei dem der vorhandene CCD-Chip mit dem jeweiligen Filter versehen dreimal hintereinander belichtet werden muss, wird beim Kamera-Scanner 10 das aufzunehmende Bild durch den Prismenteiler 30 in seine rote, grüne und blaue Farbe zerlegt, und die jeweiligen Bilder werden auf den entsprechenden Teil des 3-CCD-Chips 28 geleitet, so dass mit einer einzigen Aufnahme die drei verschiedenen Farbbilder generiert werden.

Im Gegensatz zum Stand der Technik wird im Kamera-Scanner 10 nicht die Kamera 16 vertikal verfahren, sondern es werden lediglich einzelne Linsen aus dem Motor-Zoom-Objektiv 26 verfahren, um die Bildvorlage 24 zu fokussieren. Hierdurch werden Schwingungen und Vibrationen der Kamera 16 und der Halterung 18 deutlich reduziert, insbesondere wobei das Motor-Zoom-Objektiv 26 in einem Öl-Gleitlager gehalten ist.

Außerdem erfolgt die Bildzentrierung beim Kamera-Scanner 10 nicht durch eine horizontale Verschiebung der Kamera, sondern durch eine horizontale Verschiebung des die Bildvorlage 24 haltenden Vorlageträgers 14. Das heißt zu Beginn der Arbeiten befindet sich der Vorlageträger 14 außerhalb des Gehäuses 12 des Kamera-Scanners 10, so dass das Bedienpersonal die Bildvorlage 24 in den Vorlageträger 14 einlegen kann. Hierbei ist es vorteilhaft darauf zu achten, dass die Bildvorlage 24 an den Anlagekanten 32 und 34 anliegt. Nachdem die Bildvorlage 24 also bündig an den Anlagekanten 32 und 34 zur Anlage gekommen ist, wird eine Saugvorrichtung eingeschaltet, die durch Saugöffnungen 36 Umgebungsluft anzieht. Hierdurch wird die Bildvorlage 24 im Vorlageträger 14 fixiert, so dass etwaige Wölbungen oder Eselsohren ausgeglichen werden. Somit liegt die Bildvorlage 24 plan im Vorlageträger 14. In dieser Position wird über im Vorlageträger 14 vorgesehene, hier nicht dargestellte Sensoren die Größe der Bildvorlage 24 festgestellt und deren Mittelpunkt errechnet. Danach wird der Vorlageträger 14 derart horizontal in X- und Y-Richtung verfahren, dass der Mittelpunkt der Bildvorlage 24 mit der optischen Achse 38 der Kamera 16 fluchtet. Währenddessen wird in der elektronischen Datenverarbeitungsanlage 20 aufgrund der ermittelten Größe der Bildvorlage 24 der Fokus bestimmt und das Motor-Zoom-Objektiv 26 in die entsprechende Position gefahren. Nun wird die Bildvorlage 24 abfotografiert, und die so gewonnenen Bilddaten werden in der angeschlossenen elektronischen Datenverarbeitungsanlage gespeichert und aufbereitet und können sodann auf einem entsprechenden Drucker, Laserbelichter usw. ausgedruckt bzw. belichtet werden.

Die elektronische Datenverarbeitungsanlage 20 ermittelt durch eine Kantendetektion die genauen Ränder des aufgenommenen Bildes und speichert lediglich die innerhalb dieser Ränder befindlichen Daten. Die außerhalb der Ränder befindlichen Daten werden dabei gelöscht. Hierdurch wird die Datenmenge deutlich reduziert, so dass die bildliche Bearbeitung der Aufnahme schneller durchgeführt werden kann und so dass der benötigte Speicherplatz reduziert werden kann. Außerdem wird hierdurch ein Zoomen der Bildvorlage überflüssig, so dass die Rüstzeit je Bild verringert wird, was zu einem höheren Bilddurchsatz führt.

In einer anderen, hier nicht dargestellten Ausführungsform kann die Positionierung der Bildvorlage im Vorlageträger und/oder die horizontale Ausrichtung des Vorlageträgers auch automatisch erfolgen.

In einer anderen, hier nicht dargestellten Ausführungsform kann die Kamera 16 auch drei separate CCD-Chips aufweisen, um die drei durch den Prismenteiler 30 erzeugten Bilder aufzunehmen.

### Bezugszeichenliste:

- 10: Kamera-Scanner
- 12: Gehäuse
- 14: Vorlageträger
- 16: Kamera
- 18: Haltevorrichtung
- 20: elektronische Datenverarbeitungsanlage
- 22: Bildschirm
- 24: Bildvorlage
- 26: Motor-Zoom-Objektiv
- 28: 3-CCD-Chip
- 30: Prismenteiler
- 32: Anlagekante
- 34: Anlagekante
- 36: Saugöffnung
- 38: optische Achse

## Patentansprüche

1. Vorrichtung zur Erstellung eines Bildabzuges von einer Bildvorlage, insbesondere für Fotofachlabore, mit einer Bildvorlage-Zuführeinrichtung, mit einer Kamera und mit einer die Kamera haltenden Haltevorrichtung, wobei die Vorrichtung an eine elektronische Rechenund Speichereinheit anschließbar ist,
**dadurch gekennzeichnet,**
**dass** die Kamera als 3-Chip Kamera (16) ausgebildet ist und einem Prismenteiler (30) zur Erzeugung je eines rot, grün und blau Abbildes der Bildvorlage nachgeschaltet ist, wobei jedes Abbild von einem Kamera-Chip erfasst wird.

2. Vorrichtung zur Erstellung eines Bildabzuges von einer Bildvorlage, insbesondere für Fotofachlabore, mit einer Bildvorlage-Zuführeinrichtung, mit einer Kamera und mit einer die Kamera haltenden Haltevorrichtung, wobei die Vorrichtung an eine elektronische Rechenund Speichereinheit anschließbar ist, insbesondere nach Anspruch 1,
**dadurch gekennzeichnet,**
**dass** die Bildvorlage-Zuführeinrichtung als in vier Richtungen verfahrbarer Vorlageträger (14) ausgebildet ist.

3. Vorrichtung nach Anspruch 2,
**dadurch gekennzeichnet,**
**dass** die Bildvorlage-Zuführeinrichtung eine Saugeinrichtung umfasst, die die Bildvorlage (24) über eine Anzahl von im Vorlageträger (14) vorgesehenen Saugöffnungen mittels Unterdruck im Vorlageträger (14) hält.

4. Vorrichtung nach einem der vorangehenden Ansprüche,
**dadurch gekennzeichnet,**
**dass** die Kamera (16) ein Zoom-Objektiv (26) umfasst.

5. Vorrichtung nach Anspruch 4,
**dadurch gekennzeichnet,**
**dass** das Zoom-Objektiv (26) in einem Öl-Gleitlager gelagert ist.

6. Vorrichtung nach einem der Ansprüche 2 bis 5,
**dadurch gekennzeichnet,**
**dass** im Vorlageträger (14) Sensoren zur Erfassung der Größe der Bildvorlage (24) enthalten sind.

7. Verfahren zur Erstellung eines Bildabzuges von einer Bildvorlage, insbesondere für Fotofachlabore, wobei von der Bildvorlage mindestens zwei, vorzugsweise drei unterschiedlich farbige monochromatische Abbilder erzeugt werden, wobei diese monochromatischen Abbilder von einer Kamera erfasst und digitalisiert werden, und wobei diese Abbilder in einer elektronischen Datenverarbeitungsanlage weiterbearbeitet werden,
**dadurch gekennzeichnet,**
**dass** die Bildvorlage mittels eines Prismenteilers gleichzeitig in zwei oder drei unterschiedlich farbige, monochromatische Abbilder zerlegt wird, und dass die Abbilder gleichzeitig mittels einer 3 Chip Kamera erfasst und digitalisiert werden.

8. Verfahren nach Anspruch 7,
**dadurch gekennzeichnet,**
**dass** die Bildvorlage mittels Kantendetektion lokalisiert wird. und dass nicht zur Bildvorlage gehörende Daten nicht abgespeichert werden.
